# EUROPEAN PATENT APPLICATION

(11) **EP 4 718 017 A1**
(43) Date of publication of application: **01.04.2026**
(21) Application number: 25204691.7
(22) Date of filing: 25.09.2025
(51) Int. Cl.: F41H 1/00, A01K 13/00

(54) **SCALABLE DOG BODY ARMOR**

(30) Priority: 28.09.2024 US 202463700688 P
(71) Applicant: Aardvark, Laverne, CA 91750 (US)
(72) Inventor: BECKER, Jonathan B., Laverne, 91750 (US); ARRIAGA, David Munoz, Laverne, 901750 (US)
(74) Representative: Boult Wade Tennant LLP

(57) **Abstract**

A scalable K9 body armor includes a yoke having a collar portion and an upper chest portion. The yoke is removably attachable to a body armor vest. The collar portion is configured to cover an upper portion of the neck of a K9 not covered by the vest. The upper chest portion is configured to cover an upper chest portion of the K9 not covered by the vest. The yoke is removably attachable to the vest via articulable connections which allow the yoke to move relatively freely through a wide range of movement of the K9's neck.

## Description

### Cross-Reference to Related Applications

This patent application claims priority to U.S. Provisional Patent Application Serial No. 63/700,688, entitled "SCALABLE K9 BODY ARMOR," and filed on September 28, 2024. The contents of the foregoing application is hereby expressly incorporated by reference for all purposes.

### Background

K9 body armor generally is well-known in the art. As used herein, the term "K9" refers to specially trained law enforcement and military canine animals. Typical design considerations include balancing the desire to maximize body coverage with the desire to minimize the effect of such coverage on the K9's mobility and agility needed for running, jumping, searching, biting or otherwise attacking, etc. However, existing K9 body armor designed in an effort to minimize the effect on the K9's mobility and agility results in limited coverage of the throat and upper chest, thus exposing the K9 to more dangers in exchange for allowing more mobility and agility.

Therefore, there is a need for K9 body armor that provides more coverage than known K9 body armor without sacrificing mobility and agility, especially coverage of the K9's neck, upper chest area and shoulders.

### Summary

Disclosed herein is a novel and innovative K9 body armor carrier yoke (also referred to as a "yoke") that is removably attachable to a K9 body armor carrier vest, wherein the yoke provides coverage for the neck, upper chest are and/or shoulders of a K9 that are not covered by a typical vest. The yoke is articulable relative to the vest such that the yoke does not inhibit the normal range of motion and agility of the neck and head of the K9. Thus, the resulting K9 body armor system is scalable in that the amount of ballistic coverage of the K9 can be easily increased or decreased by adding and removing components, such as adding or removing the yoke of the K9 body armor system. Also disclosed herein is a K9 body armor carrier system comprising a body armor carrier yoke in combination with the body armor carrier vest.

Accordingly, one embodiment disclosed herein is directed to a body armor carrier yoke that can be easily attached to and detached from a K9 body armor carrier vest. All embodiments of the yoke and vest described herein typically house body armor (typically soft armor) and are thus often referred to as "body armor." However, the yoke and/or vest without the body armor are more accurately described as carriers. It is understood that the embodiments of the yoke and vest are carriers having compartments to contain body armor, and may or may not be in combination with the body armor within the compartments.

The yoke includes a collar portion that covers an area of the upper portion of a K9's neck that is not covered by a vest, such as the area above the neckline of a typical vest, and a chest portion that covers an area of the upper chest portion of a K9's chest area and portions of the shoulders beyond the coverage of the vest. The yoke may also overlap portions of the vest thereby providing double coverage of such areas, and /or providing coverage of these areas when a K9's neck and head are moved to a position that moves the perimeter of the yoke away from the regular coverage area with the K9's head and neck in a regular upright and pointing straight ahead position.

The yoke includes a plurality of attachment points with attachment hardware to detachably connect the yoke to the vest. Corresponding attachment points are on the vest with corresponding complimentary attachment hardware. Such hardware may include clasps, straps, buckles (including quick-release buckles such as FASTEX^{™} buckles), snaps, hooks, zippers, hook and loop (e.g., VELCRO^{™}) or other mechanisms. In one aspect, the attachment hardware comprises a plurality of yoke connectors configured to detachably connect to corresponding vest connectors on the vest.

In one aspect, the yoke may have three attachment points including a first and second attachment point located one on each shoulder and a third attachment point located on a lower flap of the chest portion of the yoke, corresponding to a first and second attachment point on each shoulder of a top portion of the vest and a third attachment point on a front part of a bottom portion of the vest, respectively.

In another aspect, the attachment hardware (e.g., the vest connectors) can pivot / swivel up to at least approximately 90, 120, 150 or 180 degrees. For example, the yoke connectors may be articulating connectors configured to allow the yoke to move independently of the vest. In another aspect, each of the of yoke connectors comprises a strap having a first end connected to the yoke and a second end having a yoke buckle configured to detachably connect to the corresponding vest connector on the vest. In still another feature, the first end of the strap of each of the yoke connectors is adjustably connectable to the yoke such that a free length of the strap is adjustable. For example, the first end of the strap of each of the yoke connectors may be connected to the yoke via a hook and loop fastener such that the position of the yoke connectors on the yoke can be varied to adjust the free length of the strap.

In another aspect, the collar portion of the yoke is adjustable around the neck of the K9 via adjustment hardware. The adjustment hardware may include clasps, straps, buckles (including quick-release buckles such as FASTEX^{™} buckles), snaps, hooks, zippers, hook and loop (e.g., VELCRO^{™}) or other mechanisms. In another aspect, an upper edge of the collar portion forms a circular collar having a first end and a second end each having complimentary fasteners configured to connect the collar portion around the neck of the K9. In still another aspect, the complimentary fasteners may comprise hook and loop fasteners having a length which allows a diameter of the circular collar to be adjusted. In this manner, the diameter of the collar portion around the K9's neck is easily adjusted by overlapping the complimentary hook and loop fasteners at a position to provide a desired diameter.

In one feature, the position and configuration of the articulating connectors being disposed on the end of straps, combined with the adjustable collar portion, provide a yoke which can be securely mounted on the K9 and which allows a wide range of unrestricted movement of the K9's head and neck. The yoke also articulates smoothly with the K9's movement, including turning of the head, running, jumping, and biting or otherwise attacking.

In still another aspect, the yoke may have built-in buoyancy for water-based missions, e.g. up to approximately 10, 15, or 20 pounds of positive buoyancy.

In yet another aspect, the attachment hardware is at least partially (up to fully) concealed by the vest and/or yoke to help prevent snags or inadvertent detachment.

In still another aspect, the collar portion of the yoke has a narrower upper end which tapers outward to a wider lower end thereby forming a frustoconical shape (i.e., tapered outward away from the K9's neck in the shape of an "Elizabethan" collar) to allow a wide range of neck movement and increased neck protection for the K9, without interfering with other collars that are typically being worn such as e-collars and/or pinch collars.

In another aspect, the yoke may include MOLLE slots for attaching accessories such as communication, lighting, medicine, food, etc.

Another embodiment disclosed herein is directed to a system for a structured K9 body armor carrier comprising the yoke in combination with the vest. The system comprises a plurality of panels attached together to create a semi-rigid shape configured to accommodate a K9's chest and neck area. The vest includes a bottom portion and a top portion which are detachably connectable to each other to form the vest. The bottom portion of the vest is shaped to include a semi-rigid curved portion corresponding to the K9's abdomen, e.g., tapered and/or curved from front-to-back and/or side-to-side.

The bottom portion is shaped to include a semi-rigid curved portion tapering from a front side to a back side to correspond to the abdomen of a K9. The bottom portion includes a plurality of bottom portion connectors each configured to detachably connect to a respective corresponding top portion connector. In one aspect, the bottom portion connectors and top portion connectors may be complimentary hook and loop fasteners. The bottom portion also has a bottom portion vest connector configured to detachably connect to a corresponding yoke connector of the yoke.

The top portion is shaped to include a semi-rigid curved portion to correspond to the back of a K9. The top portion includes a plurality of top portion connectors each configured to detachably connect to a respective corresponding bottom portion connector. The top portion also has a top portion vest connector configured to detachably connect to a corresponding yoke connector of the yoke.

Accordingly, the bottom portion and top portion connect together to form a complete K9 body armor carrier vest. The bottom portion and top portion are configured to receive respective similarly-shaped and semi-rigid ballistics (e.g., armor panels). The respective semi-rigid ballistics may minimize slack or extra space in the vest. The semi-rigid ballistics may be formed by sewing or otherwise attaching various portions together to create a "structured" shape wherein flat materials are preformed to provide a more tailored fit to the body of the K9, both strengthening and tailoring what would otherwise be a flat panel of ballistic materials.

The yoke may be any of the suitable yoke embodiments described herein, including without limitation the yoke, and aspects of the yoke, as described above. Thus, the yoke includes a plurality of yoke connectors including a first yoke connector configured to detachably connect to a corresponding bottom portion vest connector and a second yoke connector configured to detachably connect to a corresponding top portion vest connector.

In additional aspects, the yoke of the system for a structured K9 body armor carrier may include any one or more of the aspects and features of the yoke embodiments disclosed herein. For instance, in one aspect, the bottom portion vest connector and corresponding yoke connector may form an articulating connection, and the top portion vest connector and the corresponding yoke connectors form an articulating connection. In another aspect, the articulating connection can pivot / swivel up to at least approximately 90, 120, 150 or 180 degrees. In one aspect, this may be accomplished by each of the yoke connectors including a strap having a first end connected to the yoke and a second end having a yoke buckle configured to detachably connect to a corresponding vest connector. In yet another aspect, the yoke buckle of the first yoke connector and the bottom portion vest connector are configured such that the yoke buckle of the first yoke connector can swivel relative to the bottom portion vest connector when connected to the bottom portion vest connector, and the yoke buckle of the second yoke connector and the top portion vest connector are configured such that the yoke buckle of the second yoke connector can swivel relative to the top portion vest connector when connected to the top portion vest connector.

In still another aspect of the system, the first end of the strap of each of the yoke connectors is adjustably connectable to the yoke such that a free length of the strap is adjustable. In yet another aspect, the first end of the strap of each of the yoke connectors is connected to the yoke via a hook and loop fastener. These aspects allow the effective length of the strap to be adjusted to properly fit the yoke to different sized K9s.

In still another aspect, an upper edge of the collar portion forms a circular collar having a first end and a second end, and the first end and second end have complimentary mating fasteners configured to connect the collar portion around the neck of the K9. In a further aspect, the complimentary mating fasteners may comprise hook and loop fasteners having a length which allows a diameter of the circular collar to be adjusted. These features also allow for the diameter of the collar portion to be adjustable as needed to fit different sized K9s.

In yet another aspect, the collar portion has a narrower upper end which tapers outward to a wider lower end thereby forming a frustoconical shape. As explained herein, this shape advantageously allows a wide range of neck movement and increased neck protection for the K9, without interfering with other collars that are typically being worn such as e-collars and/or pinch collars.

In still another aspect, the system may further comprise one or more ballistic panels carried in the vest and the yoke, thereby providing a scalable K9 body armor system which provides improved protective coverage over typical K9 body armor, without sacrificing the K9's normal range of motion even when in action.

Accordingly, the system includes a combination of the top portion of the vest, the bottom portion of the vest , and the yoke, configured to be attached together to form a scalable K9 body armor carrier system.

In another aspect, the vest may include a stowable handle on the top portion of the vest. The handle may be, e.g., stowable by clasps, straps, buckles (including quick-release buckles such as FASTEX buckles), snaps, hooks, zippers, hook and loop fasteners (e.g., VELCRO) or other mechanisms.

The present invention thus provides a scalable K9 ballistic carrier (aka body armor when the armor is included) that covers more area of the K9 than typical K9 body armor without sacrificing the K9's normal range of motion even when in action.

### Brief Description of the Drawings

Fig. 1 is a top view of a K9 body armor carrier yoke, according to one embodiment.
Fig. 2 is a top view of a top portion of a K9 body armor carrier vest, according to one embodiment.
Fig. 3 is a top view of a bottom portion of a K9 body armor carrier vest, according to one embodiment.
Fig. 4A is a perspective view of a K9 wearing the K9 body armor carrier vest comprising the top portion of Fig. 2 and bottom portion of Fig. 3, without a yoke attached to the vest, according to one embodiment.
Fig. 4B is a perspective view of a K9 wearing the K9 body armor carrier vest comprising the top portion of Fig. 2 and bottom portion of Fig. 3, with a yoke attached to the vest, according to one embodiment.
Fig. 5 is an enlarged top view of a yoke connector being attached to a vest connector, according to one embodiment.
Fig. 6 is a side, perspective view of a structured body armor panel configured to be carried by the bottom portion of the vest, as shown in Fig. 3, according to one embodiment.

### Detailed Description

Unless defined otherwise, all technical and scientific terms used herein have the same meaning as commonly understood by one of ordinary skill in the art to which this invention pertains. Although any methods and materials similar or equivalent to those described herein can be used in the practice or testing of the present invention, some potential and exemplary methods and materials are now described.

The following describes various embodiments, features, aspects and advantages of K9 body armor carriers, including a K9 body armor carrier yoke that is attachable and detachable to and from a K9 body armor carrier vest, and such yoke in combination with the vest. Other examples, features, aspects, embodiments, and advantages of the invention will become apparent to those skilled in the art from the following description, which is by way of illustration. As will be realized, the invention is capable of other different and obvious aspects, all without departing from the invention. Accordingly, the drawings and descriptions should be regarded as illustrative in nature and not restrictive.

Before the examples are described, it is to be understood that the invention is not limited to the particular examples described, as such may, of course, vary. It is also to be understood that the terminology used herein is for the purpose of describing particular examples only, and is not intended to be limiting, since the scope of the present invention will be limited only by the appended claims. While the invention is susceptible to various modifications, and alternative forms, specific examples thereof have been shown in the drawings and are herein described in detail. It should be understood, however, that the invention is not to be limited to the particular forms or methods disclosed, but to the contrary, the invention is to cover all modifications, equivalents and alternatives falling within the scope of the appended claims.

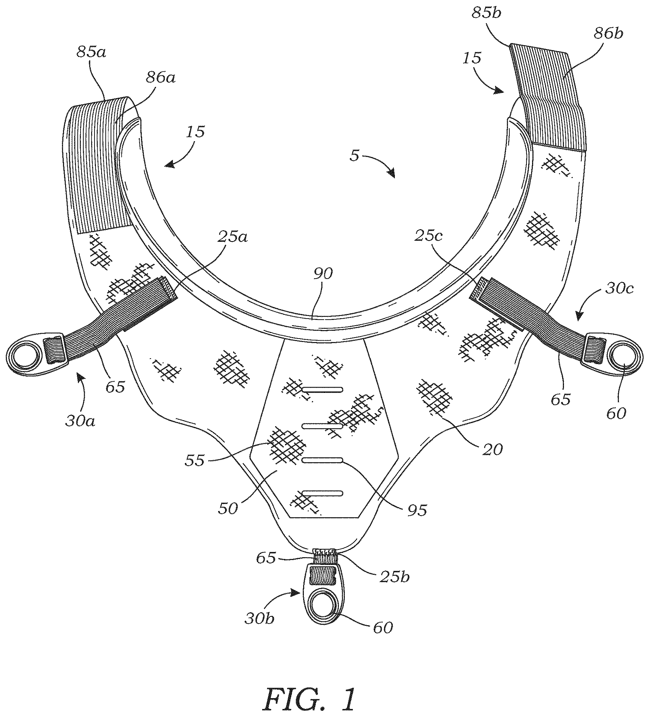

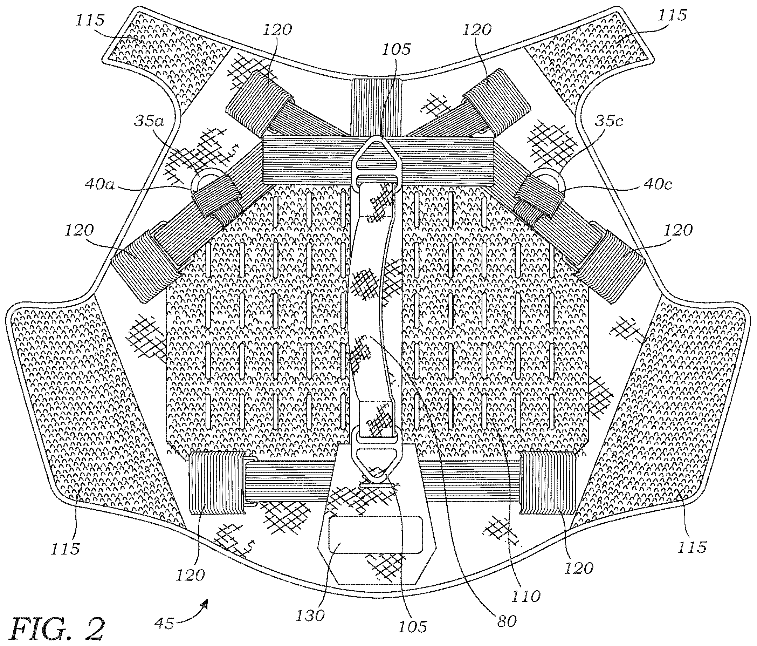

Referring now to Fig. 1, a K9 body armor carrier yoke (5) ("yoke (5)") is shown that can be easily attached to and detached from a K9 body armor carrier vest (10) ("vest (10)"; see Figs. 2-4B) and covers more of the K9's body than the vest (10) alone without compromising the K9's mobility.

The yoke (5) has a collar portion (15) and a chest portion (20). The collar portion (15) is tapered out along the upper edge (90) in the shape of an Elizabethan collar (i.e., a conical shape having a narrower upper end which tapers outward to a wider lower end thereby forming a frustoconical shape) to allow a wide range of neck movement and increased neck protection for the K9, without interfering with other collars that are typically being worn such as e-collars and/or pinch collars.

The collar portion (15) has an upper edge (90) which forms a circular collar having a first end (86a) and a second end (86b). The first end (86a) and a second end (86b) have complimentary mating fasteners (85a), (85b) (e.g., hook and loop fasteners) used to connect the collar portion (15) around the K9's neck. The length of the fasteners (85a), (85b) allow for the diameter of the collar portion (15) to be adjustable as needed to fit the neck of the K9. The yoke (5) may also include MOLLE slots (95) extending from the collar portion (15) to the chest portion (20) which allow for attachments such as lights, medicine, communication equipment, food, or other accessories to be attached.

The chest portion (20) of the yoke (5) extends downward from the collar portion (15) on the front side of the yoke (5). The chest portion (20) is configured to cover an area of the K9's upper chest.

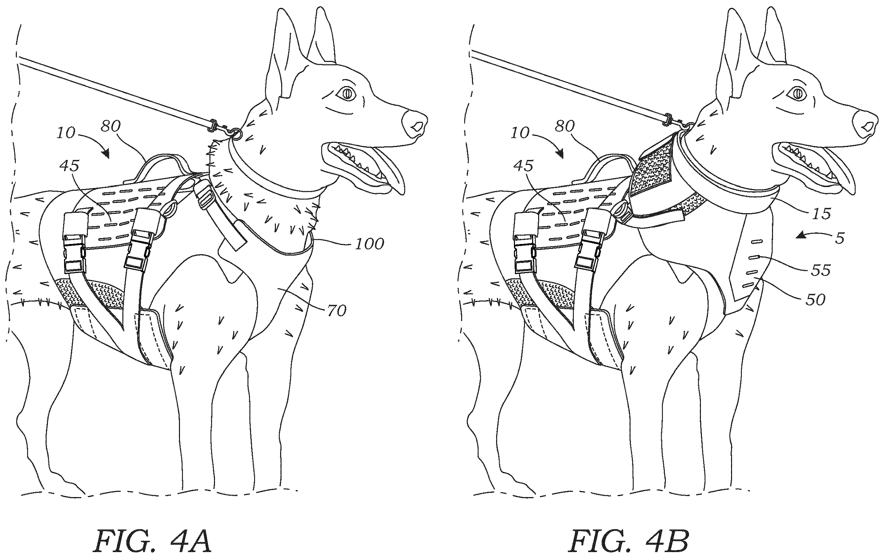

The collar portion (15) of the yoke (5) provides additional coverage of the K9's neck that is not covered by the vest (10) alone, as can be seen in FIG. 4B (showing a K9 with the vest (10) and the yoke (5)) compared to FIG. 4A (showing the K9 with the vest (10) only)). Likewise, the chest portion (20) of the yoke (5) provides additional coverage of the K9's upper chest area and shoulders that is not covered by the vest (10) alone, again as can be seen in FIG. 4B compared to FIG. 4A.

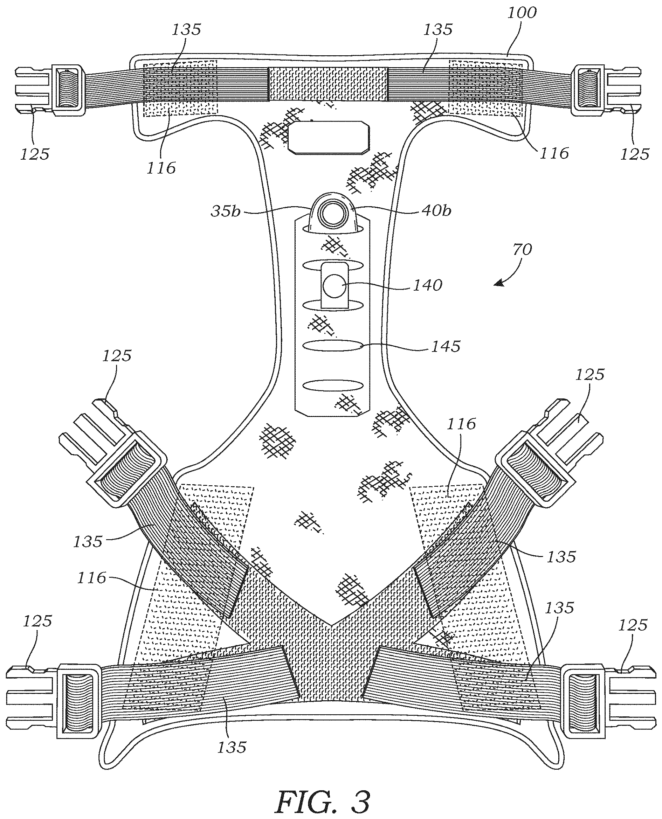

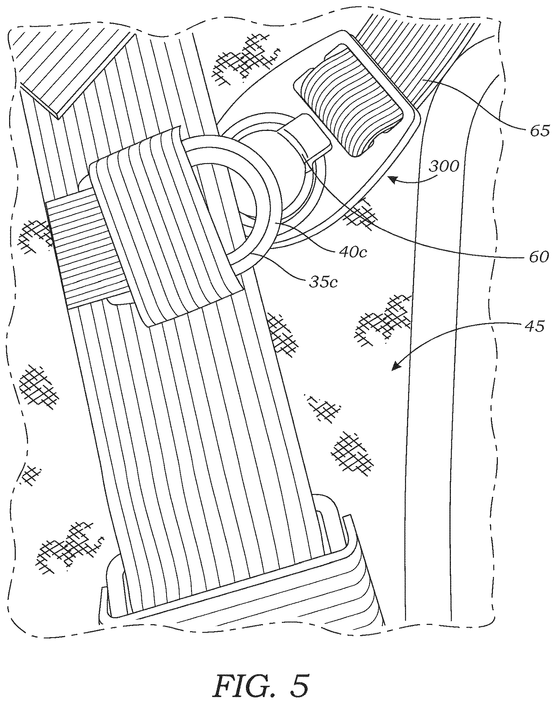

The yoke (5) includes attachment points (25) with attachment hardware to connect the yoke (5) to the vest (10). In the illustrated embodiment of FIG 1, the yoke (5) includes three attachment points (25a), (25b), (25c), although the yoke (5) may have any suitable number of attachment points (25). Attachment points (25a) and (25c) are on the shoulder portions of the yoke (5) which are positioned proximate the right and left shoulders of a K9, respectively, when the yoke (5) is worn by a K9 (see also Fig. 4B). Attachment point (25b) is on a lower flap (50) of the chest portion (20) of the yoke (5), which is positioned proximate the upper chest area when worn by K9 (see also Fig.4B). Corresponding yoke connectors (30a), (30b), and (30c) (also referred to as attachment hardware) are connected to the yoke (5) at these attachment points (25a), (25b), and (25c) respectively, and are used to attach the yoke (5) to the vest (10). In the illustrated embodiment of FIG. 1, each of the connectors (30a), (30b), and (30c) comprise a strap (65) having a first end connected to the yoke (5) and a second end having a swivel buckle (60) attached thereto. Each of the swivel buckles (60) are configured to detachably connect to a corresponding vest connector (40) (see FIGS. 2 and 3). For example, FIG. 5 shows a close up of a strap (65) with a swivel buckle (60) being inserted into a complimentary vest connector (40c) on the vest (10). The swivel buckles (60) are configured to swivel relative to the corresponding vest connectors (40) when connected to the corresponding vest connectors (40). For instance, the swivel buckles (60) can pivot / swivel up to at least approximately 90, 120, 150 or 180 degrees relative to the corresponding vest connectors (40).

The straps (65) allow adjustment of the connection of the yoke (5) to the vest (10) to accommodate various sized K9s. The first end of the strap (65) of each of the yoke connectors (30) is adjustably connectable to the yoke (5) such that the free length of the strap (65) is adjustable. In the illustrated embodiment of Fig. 1, the first end of the strap (65) of each of the yoke connectors (30) is connected to the yoke (5) via complementary hook and loop fasteners on the yoke (5) and the first end of the strap (65). This allows the effective length of the strap (65) to be adjusted to properly fit the yoke (5) to different sized K9s.

When each of the yoke connectors (30) is attached to the corresponding vest connector (40) and properly adjusted if applicable, and the collar portion (15) of the yoke (5) is positioned and secured around the K9's neck (adjusted as applicable, e.g., using the fasteners (85)), the yoke (5) is comfortably secured to the K9, while the yoke (5) still articulates with the K9 as the K9 moves so as not to impede the K9's range of motion even during running, crawling, jumping, attacking, etc.

Turning now to FIG. 2 and FIG 3, the vest (10) in accordance with an embodiment disclosed herein is shown. FIG. 2 shows the top portion (45) of the vest (10) and FIG. 3 shows the bottom portion (70) of the vest (10). The top portion (45) includes leash buckles (105) for securing one or more leashes to the vest (10), and a low-profile handle (80) to allow a handler physical control over the K9 as needed. The handle (80) is low-profile in that it can be at least partially (up to fully) flattened to the surface of the top portion (45) of the vest (10) and/or otherwise concealed. For example, the handle (80) may have a hook (or loop) fastener surface to mate with a complimentary loop (or hook) fastener surface of the top portion (45) of the vest (10). The top portion (45) of the vest (10) may also have MOLLE slots (110) for attaching accessories.

The top portion (45) includes a plurality of top portion connectors (115) disposed on wings of the top portion (45) of the vest (10). The top portion connectors (115) are configured to mate with corresponding complimentary bottom portion connectors (116) disposed on attachment surfaces on the bottom portion (70) of the vest (10) which oppose the wings when the top portion (45) is mated with the bottom portion (70). The top portion connectors (115) and bottom portion connectors (116) may be complimentary hook and loop fasteners.

The top portion also (45) has a plurality of top connectors (120) (also referred to as "buckles (120)") which mate with complimentary corresponding bottom connectors (125) on the bottom portion (70) of the vest (10) to secure the top portion (45) to the bottom portion (70). In the illustrated embodiment, the top portion (45) has six top connectors (120) and the bottom portion (70) has six bottom connectors (120), arranged around the perimeter of the top portion (45) and bottom portion (70) respectively. The top portion (45) has a plurality of vest connectors (40a) and (40c) configured to detachably connect to the corresponding yoke connectors (30a) and (30c) of the yoke (5).

The buckles (120) may be at least partially (up to fully) concealed, e.g., by fabric as shown in FIG. 2, to minimize the risk of third-party tampering, snagging, wear and tear, etc. Similarly, the vest connectors (40a) and (40c) at first and second attachment points (35a) and (35c) respectively for receiving the yoke connectors (30a) and (30c) respectively from the yoke (5), are also at least partially (up to fully) concealed. The top portion (45) of the vest (10) includes a reinforced attachment point (130) that can be used to attach a repelling or hoisting harness (not shown).

FIG. 3 shows an embodiment of the bottom portion (70) of the vest (10). As described above, the attachment surfaces of the bottom portion (70) include a plurality of bottom portion connectors (116) configured to mate with the corresponding complimentary top portion connectors (115) disposed on the wing surfaces of the top portion (45) of the vest (10) when the bottom portion (70) is mated with the top portion (45) such that the top portion wings and the bottom portion attachment surfaces oppose each other.

The bottom portion (70) also has a plurality of bottom connectors (125) which mate with complimentary corresponding top connectors (120) on the top portion (45) to secure the bottom portion (70) to the top portion (45). The bottom connectors (125) may be disposed on adjustable straps (135) to allow the vest (10) to be adjusted to fit various sized K9s.

The bottom portion (70) has a vest connector (40b) at attachment point (35b). The vest connector (40b) is configured to detachably connect to the corresponding yoke connector (30b) (also referred to as "yoke attachment hardware (30b)") at attachment point (25b) of the yoke (5). The vest connector (40b) may also be adjustable. In the embodiment shown in FIG. 3, a snap lock (140) is repositionable in various MOLLE slots (145) to correspondingly reposition the location of the vest connector (40b), which in turn causes the yoke (5) to be raised or lowered on the K9's neck based on the yoke (5) being connected to the lower portion (70) of the vest (10) by the yoke connector (30b).

Turning now to FIG. 4A, a K9 is shown wearing the embodiment of the vest (10) illustrated in FIGS. 2 and 3 (top portion (45) and bottom portion (70)) without a yoke (5) attached. The neckline (100) of the vest (10) is similar to the necklines of typical K9 body armor vests. FIG. 4B, by comparison, shows the K9 wearing the vest (10) of FIG. 4A in combination with a yoke (5) of the present invention. As can be seen when compared to FIG. 4A, the collar portion (15) of the yoke (5) covers an extended area of the K9's neck not covered by the vest (10), and the chest portion (55) of the yoke (5) covers an extended area of the K9's chest and shoulders not covered by the vest (10). The yoke (5) is removable by disengaging the yoke (5) from the vest (10) at the vest attachment points (35a), (35b), and (35c) and disengaging the adjustable collar fasteners (85).

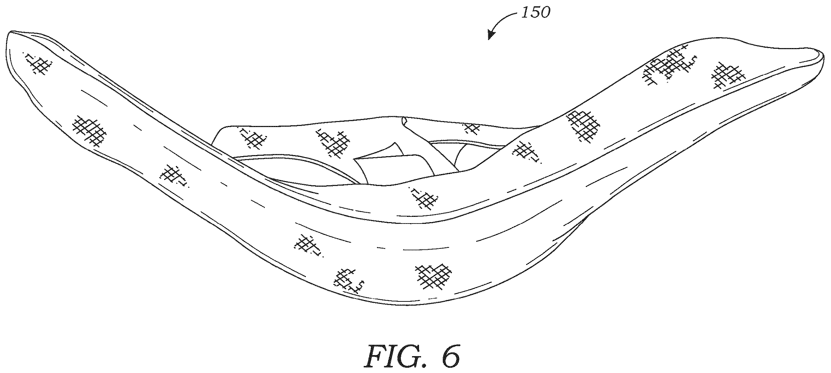

Referring now to FIG. 6, an embodiment of a structured body armor (150) corresponding to the bottom portion (70) of the vest (10) in accordance with the present invention is shown. As stated herein, the body armor (150) is shaped to include a semi-rigid curved portion corresponding to the K9's abdomen and is configured to fit snugly into a similarly-shaped and semi-rigid bottom portion (70) of the vest (10).

Thus, a scalable K9 body armor carrier system, and scalable K9 body armor system (i.e., carrier in combination with body armor carried in the carrier), has thus been described, including a K9 body armor carrier vest (10), and a detachable yoke (5) that covers more area of the K9 than typical K9 body armor without sacrificing the K9's normal range of motion even when in action.

Examples of the disclosure can include one or more of the following clauses:
Clause 1. A system for a structured K9 body armor carrier comprising a plurality of panels attached together to create a semi-rigid shape configured to accommodate a K9's chest and neck area, the system comprising:
   a vest; and
   a yoke that is attachable and detachable to and from the vest;
   wherein the vest comprises:
      a bottom portion shaped to include a semi-rigid curved portion tapering from a front side to a back side to correspond to an abdomen of a K9, the bottom portion having a plurality of bottom portion connectors, and a bottom portion vest connector configured to detachably connect to a first yoke connector of the yoke;
      a top portion shaped to include a semi-rigid curved portion to correspond to a back of the K9, the top portion having a plurality of top portion connectors each configured to connect to a corresponding bottom portion connector and a top portion vest connector configured to detachably connect to a second yoke connector of the yoke;
   wherein the yoke comprises:
      a collar portion configured to cover an upper portion of a neck of the K9 that is not covered by the vest;
      an upper chest portion configured to cover an upper chest portion of the K9 that is not covered by the vest; and
      a plurality of yoke connectors for attaching the yoke to the vest, the plurality of yoke connectors comprising the first yoke connector configured to detachably connect to the bottom portion vest connector and the second yoke connector configured to detachably connect to the top portion vest connector.
Clause 2. The system of clause 1, wherein the bottom portion vest connector and the first yoke connector form an articulating connection, and the top portion vest connector and the second yoke connector form an articulating connection.
Clause 3. The system of clause 1, wherein each of the plurality of yoke connectors comprises a strap having a first end connected to the yoke and a second end having a yoke buckle configured to detachably connect to a corresponding vest connector.
Clause 4. The system of clause 3, wherein the yoke buckle of the first yoke connector and the bottom portion vest connector are configured such that the yoke buckle of the first yoke connector can swivel relative to the bottom portion vest connector when connected to the bottom portion vest connector, and the yoke buckle of the second yoke connector and the top portion vest connector are configured such that the yoke buckle of the second yoke connector can swivel relative to the top portion vest connector when connected to the top portion vest connector.
Clause 5. The system of clause 3 or clause 4, wherein the first end of the strap of each of the plurality of yoke connectors is adjustably connectable to the yoke such that a free length of the strap is adjustable.
Clause 6. The system of clause 4, wherein the first end of the strap of each of the plurality of yoke connectors is connected to the yoke via a hook and loop fastener.
Clause 7. The system of clause 1, wherein an upper edge of the collar portion forms a circular collar having a first end and a second end, the first end and second end having complimentary mating fasteners configured to secure the collar portion around the neck of the K9.
Clause 8. The system of clause 7, wherein the complimentary mating fasteners comprise hook and loop fasteners having a length which allows a diameter of the circular collar to be adjusted.
Clause 9. The system of clause 1, wherein the collar portion has a narrower upper end which tapers outward to a wider lower end thereby forming a frustoconical shape.
Clause 10. The system of any of clauses 1 to 9, further comprising one or more ballistic panels carried in the vest and the yoke.

## Claims

1. A yoke for a K9 body armor carrier, comprising:
a collar portion;
an upper chest portion; and
a plurality of yoke connectors configured for attaching the yoke to a vest of the body armor carrier;
wherein the collar portion is adjustable around a neck of a K9 and each of the plurality of yoke connectors is configured to detachably connect to a corresponding vest connector on the vest;
wherein the collar portion is configured to cover an upper portion of the neck of the K9 that is not covered by the vest; and
wherein the chest portion is configured to cover an upper chest portion of the K9 that is not covered by the vest and to cover portions of shoulders of the K9 that are not covered by the vest.

2. The yoke of claim 1, wherein the plurality of yoke connectors are articulating connectors configured to allow the yoke to move independently of the vest.

3. The yoke of claim 2, wherein each of the plurality of yoke connectors comprises a strap having a first end connected to the yoke and a second end having a yoke buckle configured to detachably connect to the corresponding vest connector.

4. The yoke of claim 3, wherein each of the yoke buckles is configured to swivel relative to the corresponding vest connector when connected to the corresponding vest connector.

5. The yoke of claim 3 or 4, wherein the first end of the strap of each of the yoke connectors is adjustably connectable to the yoke such that a free length of the strap is adjustable.

6. The yoke of claim 5, wherein the first end of the strap of each of the yoke connectors is connected to the yoke via a corresponding hook and loop fastener.

7. The yoke of claim 1, wherein an upper edge of the collar portion forms a circular collar having a first end and a second end each having complimentary fasteners configured to secure the collar portion around the neck of the K9.

8. The yoke of claim 7, wherein the complimentary fasteners comprise hook and loop fasteners having a length which allows a diameter of the circular collar to be adjusted.

9. The yoke of claim 1, wherein the collar portion has a narrower upper end which tapers outward to a wider lower end thereby forming a frustoconical shape.

10. The yoke of any preceding claim, in combination with one or more ballistic panels carried in the yoke.

11. The yoke of claim 1, in combination with the vest, wherein the vest has a top portion and a bottom portion, and the yoke is attachable and detachable to and from the top portion of the vest and to and from the bottom portion of the vest.

12. A system for a structured K9 body armor carrier comprising a plurality of panels attached together to create a semi-rigid shape configured to accommodate a K9's chest and neck area, the system comprising:
a vest; and
a yoke as claimed in any preceding claim, the yoke being attachable and detachable to and from the vest;
wherein the vest comprises:
a bottom portion shaped to include a semi-rigid curved portion tapering from a front side to a back side to correspond to an abdomen of a K9, the bottom portion having a plurality of bottom portion connectors, and a bottom portion vest connector configured to detachably connect to a first yoke connector of the plurality of yoke connectors;
a top portion shaped to include a semi-rigid curved portion to correspond to a back of the K9, the top portion having a plurality of top portion connectors each configured to connect to a corresponding bottom portion connector and a top portion vest connector configured to detachably connect to a second yoke connector of the plurality of yoke connectors.

13. The system of claim 12, wherein the bottom portion vest connector and the first yoke connector form an articulating connection, and the top portion vest connector and the second yoke connector form an articulating connection.

14. The system of claim 12, when dependent on any of claims 3 to 5, wherein the yoke buckle of the first yoke connector and the bottom portion vest connector are configured such that the yoke buckle of the first yoke connector can swivel relative to the bottom portion vest connector when connected to the bottom portion vest connector, and the yoke buckle of the second yoke connector and the top portion vest connector are configured such that the yoke buckle of the second yoke connector can swivel relative to the top portion vest connector when connected to the top portion vest connector.

15. The system of any of claims 12 to **14,** further comprising one or more ballistic panels carried in the vest and the yoke.
